# EUROPÄISCHE PATENTSCHRIFT

(11) **EP 0 680 125 B1**
(45) Veröffentlichungstag und Bekanntmachung des Hinweises auf die Patenterteilung: **30.09.1998**
(21) Anmeldenummer: 95106107.6
(22) Anmeldetag: 24.04.1995
(51) Int. Cl.: H02G 3/12

(54) **Einbaudose**
Box for flush mounting
Boîtier pour montage affleurant

(30) Priorität: 30.04.1994 DE 4415295
(43) Veröffentlichungstag der Anmeldung: 02.11.1995
(73) Patentinhaber: ABB PATENT GmbH, 68309 Mannheim (DE)
(72) Erfinder: Zapp, Robert, D-58579 Schalksmühle (DE)
(74) Vertreter: Rupprecht, Klaus, Dipl.-Ing.

(56) Entgegenhaltungen:
- DE-C- 4 214 009
- DE-U- 1 881 173
- FR-A- 2 670 625
- US-A- 3 472 945

## Beschreibung

Die Erfindung betrifft eine Einbaudose für die Montage von elektrischem Unterputz-lnstallationsgeräte mit einem topfähnlichen Gehäuse aus Isoliermaterial mit rundem, ovalem oder eckigem Querschnitt mit einer Aufnahmeöffnung für das zu montierende Gerät und mit einem der Aufnahmeöffnung gegenüber befindlichen Boden sowie mit einer Trennwand, die den Innenraum in zwei Teilräume unterteilt.

Die Montage von elektrischen Installationsgeräten erfolgt im Innenbereich von Gebäuden, z. B. im Wohnbereich oder in Büroräumen, üblicherweise in Unterputzmontage, d. h. quasi bündig mit der jeweiligen Montageoberfläche, wobei die zugehörigen Anschlußleitungen ebenfalls unter Putz gelegt sind. Um eine ausreichende Isolation der elektrischen Anschlüsse zu gewährleisten, werden sogenannte Einbaudosen aus Isoliermaterial, vorzugsweise einspritzfähiger Kunststoff, in die jeweiligen Montageöffnungen eingesetzt, welche in die entsprechenden Montageflächen eingelassen sind. Die Einbaudosen ihrerseits sind entsprechend für die Aufnahme der zur Montage vorgesehenen Installationsgeräte vorbereitet, welche mit Hilfe von Spreizklemmen darin mechanisch gehalten werden. Für den elektrischen Anschluß werden die betreffenden Installationsgeräte mit den üblicherweise Netzspannung von 220 bzw. 230 V führenden Anschlußleitungen verbunden.

Inzwischen werden in zunehmendem Maße neben Versorgungsleistungen mit Netzspannung auch sogenannte Bus-Systeme, wie zum Beispiel Europäischer Installationsbus, installiert, welche mit einer Kleinspannung, wie zum Beispiel Schutzkleinspannung 30 V beim Europäischen Installationsbus, betrieben werden. Dabei besteht die generelle Forderung, daß stets eine definierte Trennung zwischen Geräteteilen, die an Netzspannung angeschlossen sind und solchen, die mit Buskleinspannung versorgt werden, gewährleistet ist. Innerhalb eines größeren Verbrauchergerätes ist dies verhältnismäßig einfach lösbar, wie Anwendungsfälle aus der Telekommunikationstechnik, zum Beispiel Anrufbeantworter belegen. Es ist jedoch besonders bei Kleingeräten schwierig, die geforderte Trennung durchgängig einzuhalten. Praktisch ausgeschlossen ist eine solche Trennung bei Geräten, die in eine Unterputz-Einbaudose eingebaut werden sollen, da sowohl für Netz- als auch für die Kleinspannung jeweils ein separater Anschlußraum gefordert ist.

Eine Einbaudose der eingangs genannten Art ist aus der DE-A-42 14 009 bekannt, in welcher eine Unterputzabzweigdose, insbesondere für den Installationsbus offenbart ist. Bei der bekannten Einbaudose ist wahlweise eine einstückige Verbindung der Trennwand mit dem Gehäuse der Einbaudose vorgesehen oder eine formschlüssige Führung der Trennwand in an der Gehäusewand angeordneten Nuten, um so auch die normale Verwendung als Abzweigdose zu ermöglichen.

Ausgehend von diesem Stand der Technik ist es Aufgabe der Erfindung eine Einbaudose der eingangs genannten Art zu schaffen, welche innerhalb einer Einbaudose die Forderung nach getrennten Anschlußräumen für Netzspannung und für Kleinspannung erfüllt und auf einfache Weise die Abänderung in eine herkömmliche Anschlußdose erlaubt.

Diese Aufgabe wird erfindungsgemäß durch die kennzeichnenden Merkmale des Anspruchs 1 gelöst. Danach ist vorgesehen, daß einstückig mit der Gehäusewand verbundene und gemeinsam mit dem Gehäuse hergestellte Trennwand mit entsprechenden Kerben versehen ist, die als Sollbruchstelle dienen, um gegebenenfalls eine Veränderung der Einbaudose für herkömmliche Verwendung vorzubereiten. Solche Kerben erleichtern das Herausbrechen der Trennwand, ohne daß die Gehäusewand hierdurch Schaden nimmt.

In weiterer Ausgestaltung der Erfindung kann vorgesehen sein, daß die durch die Trennwand geschaffenen, gegeneinander abgetrennten Anschlußräume gleiche oder unterschiedliche Größe aufweisen.

Eine alternative Ausgestaltung der Erfindung kann darin bestehen, daß mehr als eine Trennwand in der Einbaudose angeordnet sind, um auf diese Weise gegebenenfalls eine größere Verwendungsbreite der entsprechend ausgestalteten Einbaudose zu erreichen.

Gemäß einer ausgewählten Ausführungsform der Erfindung kann vorgesehen sein, daß ein durch eine Trennwand abgetrennter Bereich mit einer Abschirmung versehen ist gegenüber dem anderen Bereich, um auf diese Weise Einflüsse durch ein elektromagnetisches oder elektrisches Feld zu verhindern.

Entsprechend einer weiteren vorteilhaften Ausgestaltung der Erfindung ist bei einer kreisförmigen Einbaudose vorgesehen, daß die Trennwand parallel zum Durchmesser des Gehäuses angeordnet ist.

Diese und weitere vorteilhafte Ausgestaltungen sind Gegenstand der Unteransprüche.

Anhand eines in einer Zeichnung dargestellten Ausführungsbeispiels sollen die Erfindung, besondere Ausgestaltungen und Vorteile der Erfindung näher erläutert und beschrieben werden.

Es zeigen
- Fig. 1:: eine erfindungsgemäße Einbaudose in Seitenansicht
- Fig. 2:: die Einbaudose nach Fig. 1 in Draufsicht
- Fig. 3:: die rückseitige Ansicht eines Einbaugeräts für die Einbaudose nach Fig. 1

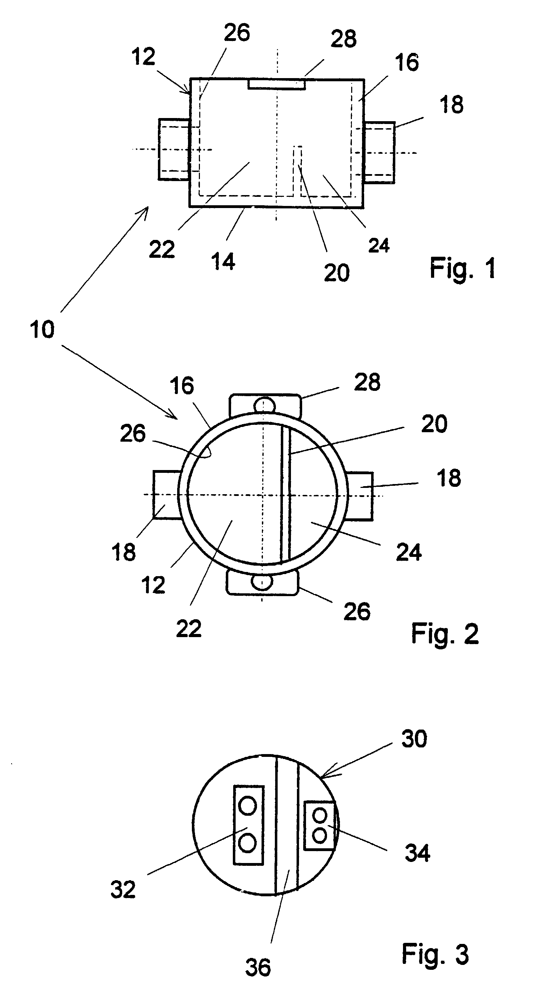

In Fig. 1 ist eine Unterputz-Einbaudose 10 in Seitenansicht dargestellt, welche ein topfähnliches Gehäuse mit einem Boden 14 und Seitenwänden 16 aufweist, an welche diametral gegenüberliegend Anschlußstutzen 18 angeformt sind. Im gezeigten Ausführungsbeispiel, insbesondere unter Einbeziehung der Darstellung gemäß Fig. 2, ist erkennbar, daß die Unterputz-Einbaudose 10 ein zylindrisches Gehäuse 12 besitzt, dessen Innenraum durch eine Trennwand 20, in Fig. 1 gestrichelt gezeichnet, in zwei separate Anschlußräume 22, 24 unterteilt ist.

Die Trennwand 20 besteht ebenso wie die Seitenwand 16 und der Boden 14 aus einem elektrisch isolierenden Werkstoff, z. B. Polystyrol, und ist einstückig mit dem Boden 14 und der Seitenwand 16 verbunden. Hierdurch ist gewährleistet, daß die beiden Anschlußräume 22, 24 gegeneinander elektrisch vollkommen isoliert sind.

Am Außenrand der Seitenwand 16 an der dem Boden 14 gegenüber liegenden Aufnahmeöffnung sind gegenüber den Anschlußstutzen 18 um 90° versetzt, ebenfalls diametral gegenüber liegend Haltelaschen 26 angeformt, welche zur Verankerung der Einbaudose an der jeweiligen Einbaustelle dienen und eine zusätzliche Befestigung der Einbaudose 10, z. B. mittels Schrauben, ermöglichen.

In Fig. 3 ist die Rückseite eines zur Montage in der erfindungsgemäßen Einbaudose 10 vorgesehenen Einbaugerätes 30 gezeigt, welches sowohl separater Anschlußklemmen 32, 34 entsprechend den Anschlußräumen 22, 24 in der Einbaudose aufweist, sowie einen Schlitz 36, in welchen die Trennwand 20 beim Einsetzen des Einbaugerätes in die Einbaudose 10 eingreift. Zu diesem Zweck ist, wie insbesondere aus Fig. 1 ersichtlich, die Trennwand 20 nicht bis in Höhe der Seitenwand 16 hochgezogen, sondern sie besitzt eine hierzu geringere Höhe, wobei der verbleibende Zwischenraum zwischen der Oberkante der Trennwand 20 und der Oberkante der Seitenwand 16 von dem jeweiligen Einbaugerät 30 ausgefüllt wird.

Hierdurch ist es sichergestellt, daß Rückwirkungen aus dem einen Anschlußraum 22 auf den anderen Anschlußraum 24 infolge der Mehrwandigkeit sowie der labyrinthähnlichen Abdichtung unter Einbeziehung des Einbaugerätes 30 sicher verhindert werden.

## Patentansprüche

1. Einbaudose (10) für die Montage von Unterputz-lnstallationsgeräten (30) mit einem topfähnlichen Gehäuse (12) aus Isoliermaterial mit rundem, ovalem oder eckigem Querschnitt mit einer Aufnahmeöffnung (26) für das zu montierende Gerät (30) und einem der Aufnahmeöffnung (26) gegenüber befindlichen Boden (14), wobei innerhalb des Gehäuses (12) wenigstens eine Trennwand (29) angeordnet ist, welche den Innenraum des Gehäuses (12) in wenigstens zwei separate Bereiche (22, 24) unterteilt und einstückig mit dem Gehäuse (12) verbunden ist, dadurch gekennzeichnet, daß die Trennwand (20) Sollbruchkerben aufweist, die einfaches Herausbrechen der Trennwand (20) aus der Gehäusewand (16) erlauben.

2. Einbaudose nach Anspruch 1, dadurch gekennzeichnet, daß die Einbaudose (10) mittels der Trennwand (20) in gleich große Bereiche unterteilt ist.

3. Einbaudose nach einem der Ansprüche 1 oder 2, dadurch gekennzeichnet, daß das Gehäuse (12) in unterschiedlich große Bereiche (22, 24) unterteilt ist.

4. Einbaudose nach einem der vorherigen Ansprüche, dadurch gekennzeichnet, daß ein abgetrennter Bereich (24) mit einer Abschirmung versehen ist gegenüber dem wenigstens einem anderen Bereich (22).

5. Einbaudose nach einem der vorherigen Ansprüche mit kreisförmigen Querschnitt, dadurch gekennzeichnet, daß die Trennwand (20) parallel zum Durchmesser des Gehäuses (12) angeordnet ist.

6. Einbaudose nach einem der vorherigen Ansprüche, dadurch gekennzeichnet, daß mehr als eine Trennwand (20) vorgesehen ist.

## Claims

1. Flush-mounted box (10) for the mounting of flush-mounted service devices (30) having a pot-like housing (12) made of insulating material with a round, oval or polygonal cross-section with a retaining opening (26) for the device (30) to be fitted, and having a bottom (14) which is located opposite the retaining opening (26), at least one partition wall (29) being arranged inside the housing (12), splitting the interior of the housing (12) into at least two separate areas (22, 24) and being integrally connected to the housing (12), characterized in that the partition wall (20) has weak-point notches which allow the partition wall (20) to be knocked out of the housing wall (16) easily.

2. Flush-mounted box according to Claim 1, characterized in that the flush-mounted box (10) is split by means of the partition wall (20) into areas of equal size.

3. Flush-mounted box according to one of Claims 1 or 2, characterized in that the housing (12) is split into areas (22, 24) of different size.

4. Flush-mounted box according to one of the preceding claims, characterized in that a separated area (24) is provided with a screen from the at least one other area (22).

5. Flush-mounted box according to one of the preceding claims having a circular cross-section, characterized in that the partition wall (20) is arranged parallel to the diameter of the housing (12).

6. Flush-mounted box according to one of the preceding claims, characterized in that more than one partition wall (20) is provided.

## Revendications

1. Boîte d'encastrement (10) pour le montage d'appareils d'installation (30) encastrés, avec un corps (12) en forme de récipient en un matériau isolant, à section circulaire, ovale ou rectangulaire, pourvu d'une ouverture de montage (26) pour l'appareil (30) à monter et d'un fond (14) disposé en vis-à-vis de l'ouverture de montage (26), au moins une paroi de séparation (29) qui divise l'espace intérieur du corps (12) en au moins deux chambres (22, 24) distinctes et est liée d'une pièce au corps (12) étant disposée à l'intérieur du corps (12), caractérisée par le fait que la paroi de séparation (20) présente des points destinés à la rupture qui permettent de détacher de manière simple, par rupture, la paroi de séparation (20) de la paroi de corps (16).

2. Boîte d'encastrement selon la revendication 1, caractérisée par le fait que la boîte d'encastrement (10) est divisée en chambres de mêmes dimensions à l'aide de la paroi de séparation (20).

3. Boîte d'encastrement selon une des revendications 1 ou 2, caractérisée par le fait que le corps (12) est divisé en chambres (22, 24) de dimensions différentes.

4. Boîte d'encastrement selon une des revendications précédentes, caractérisée par le fait qu'une chambre (24) est pourvue d'une protection vis-à-vis de l'autre chambre (22) au nombre d'au moins une.

5. Boîte d'encastrement selon une des revendications précédentes présentant une section circulaire, caractérisée par le fait que la paroi de séparation (20) est parallèle au diamètre du corps (12).

6. Boîte d'encastrement selon une des revendications précédentes, caractérisée par le fait qu'il est prévu plus d'une paroi de séparation (20).
